# EUROPEAN PATENT APPLICATION

(11) **EP 1 473 923 A1**
(43) Date of publication of application: **03.11.2004**
(21) Application number: 04101868.0
(22) Date of filing: 30.04.2004
(51) Int. Cl.: H04N 1/32, H04N 1/00

(54) **Using an Email System as a Supplementary Memory for a Facsimile Machine**

(30) Priority: 02.05.2003 KR 2003028169
(71) Applicant: Samsung Electronics Co., Ltd., Suwon-si Gyeonggi-do 442-742 (KR)
(72) Inventor: KIM, Young-hoon, Gyeonggi-do (KR)
(74) Representative: Read, Matthew Charles

(57) **Abstract**

A network facsimile and an network facsimile operation method include storing received facsimile data until an amount of the received facsimile data is more than a predetermined amount if the facsimile data corresponding to a facsimile document is received from an outside source when there is no printing paper on which the facsimile data is to be printed; converting and transmitting the stored facsimile data into a form of an electronic mail to the mail server, if the amount of the received facsimile data is more than the predetermined amount or if the facsimile data is completely received; and determining whether the facsimile data is completely received, and proceeding to the operation of storing the received facsimile data if the facsimile data is not completely received. Therefore, it is possible to prevent the received facsimile document from being lost, regardless of the received amount of the facsimile data and a storage space, by receiving and simultaneously dividing a large amount of the facsimile data into the form of the electronic mail when there is no printing paper or the storage space is limited, and then receiving and displaying the facsimile data from a designated mail address to a user when printing paper is newly supplied.

## Description

The present invention relates to a method of using an email system as a supplementary memory for a facsimile machine, the method comprising emailing received fax data from a facsimile machine to a remote location for subsequent retrieval and to a facsimile machine comprising document printing means, means for receiving facsimile signals, data network communication means, a memory for storing fax data and control means configured for emailing received fax data to a remote location using the data network communication means for subsequent retrieval.

A network facsimile is a device capable of receiving images via a telephone line and transmitting the received images via a data network. A conventional network facsimile converts facsimile data stored in a memory into the form that can be included in an email and transmits the email to a the designated electronic mail address in a case where the facsimile is low on memory for storing received facsimile documents or out of paper. Thereafter, if printing paper is newly supplied to the network facsimile and the memory space is sufficient, the network facsimile retrieves and prints the electronic mail transmitted to the designated electronic mail address.

The conventional network facsimile determines whether there is no printing paper or whether the available memory is low before receiving any facsimile data, and manages the memory according to the determined result. Accordingly, a problem exists in that the conventional network facsimile can lose the received facsimile data in the case where the paper or memory runs out during reception of a large document.

A method, according to the present invention, is characterised in that a chunk of received fax data is emailed when the facsimile machine is out of paper and the chunk of fax data exceeding a predetermined size has been received.

A facsimile machine, according to the present invention, is characterised in that the control means is configured such that a chunk of received fax data is emailed when the facsimile machine is out of paper and the chunk of fax data exceeding a predetermined size has been received.

Preferably, fax data for the end of a document is emailed when the fax machine is out of paper and a preceding chunk of the document was emailed.

Received fax data may be converted from raw fax data to another format before or after storage. The predetermined size may relate to raw or converted fax data.

Preferably, chunks consist of integer numbers of facsimile document pages.

Each email preferably comprise a document identifier and a sequence indicator, indicating the position of its contents in the received facsimile document.

Preferably, the loading of paper into the facsimile machine is detected and, in response thereto, an email, containing fax data, that had previously been sent from the facsimile machine is downloaded from the remote location and, for example, printed.

Embodiments of the present invention will now be described, by way of example, with reference to the accompanying drawings, in which:
Figure 1 is a flowchart illustrating a method of operating a network facsimile according to the present invention;
Figure 2 is a flowchart illustrating a method of performing operation 10 shown in Figure 1;
Figure 3 is a flowchart illustrating a method of performing operation 26 shown in Figure 2;
Figure 4 is a flowchart illustrating another method of performing operation 26 shown in Figure 2;
Figure 5 is a flowchart illustrating a method of performing operation 12 shown in Figure 1;
Figure 6 is a flowchart illustrating another method of operating a network facsimile according to the present invention;
Figure 7 is a flowchart illustrating a method of performing operation 106 shown in Figure 6;
Figure 8 is a block diagram of a network facsimile according to the present invention;
Figure 9 is a block diagram of the data receiving processor of the network facsimile shown in Figure 8;
Figure 10 is a block diagram of the data management unit of the data receiving processor shown in Figure 9 according to another embodiment of the present invention;
Figure 11 is a block diagram of an alternative data management unit for the data receiving processor shown in Figure 9;
Figure 12 is a block diagram of the data transmitting processor of the network facsimile shown in Figure 8;
Figure 13 is a block diagram of another network facsimile according to the present invention;
Figure 14 is a block diagram of the mail receiving and displaying unit of the network facsimile shown in Figure 13;
Figures 15-17 show forms of emails produced by the network facsimiles shown in Figures 8 and 13; and
Figure 18 shows examples of emails stored in a mail server accessible to the network facsimile shown in Figures 8 and 13.

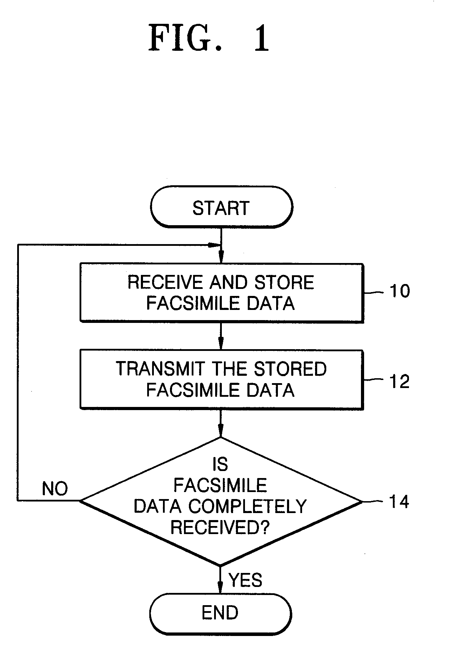

Referring to Figure 1, a method of operating a network facsimile, according to the present invention, comprises receiving and storing facsimile data corresponding to a facsimile document and transmitting the stored facsimile data in operations 10 to 14. The facsimile document includes images of one or more document pages.

The network facsimile has a function for transmitting emails to a mail server and/or receiving emails from a mail server (not shown) as well as its facsimile function.
For example, the network facsimile (not shown) can transmit faxes to other fax machines and receive faxes from other fax machines. Additionally, it can send facsimile data to a mail server program in emails and receive emails containing fax data from a mail server program. The receiving and sending server programs may be running on the same or different computers. If the mail server programs are running on different computers, emails, containing facsimile data, are routed from the receiving server computer to the sending server computer. The receiving server program may be an SMTP (Simple Mail Transport Protocol) server and the sending server program may be a POP3 (Post Office Protocol) or IMAP4 (Internet Message Access Protocol) server.

If the network facsimile's paper runs out before or during reception of facsimile document data from an outside source, the received facsimile data is stored until the amount of received facsimile data reaches a predetermined amount in operation 10.

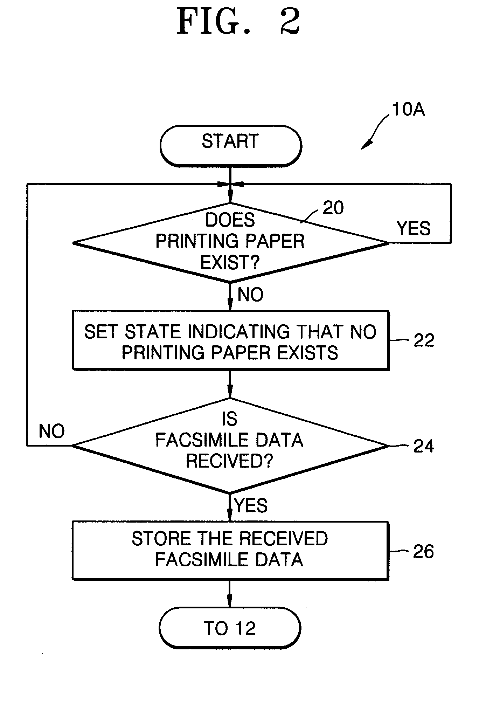

Referring to Figure 2, an example 10A of operation 10 in Figure 1 comprises determining whether facsimile data is received when the paper has run out, in operations 20 to 24 and storing the received facsimile data in operation 26.

It is first determined whether there is printing paper in operation 20. If there is no printing paper, a flag (state) indicating that there is no printing paper is set in operation 22. After operation 22, it is determined whether facsimile data is being received in operation 24.

Operation 22 can be omitted from the process 10A shown in Figure 2. In this case, if it is determined that there is no printing paper, it is determined whether facsimile data is being received in operation 24. If it is determined that no facsimile data is being received, the process proceeds to operation 20. However, if it is determined that facsimile data is being received, the received facsimile data is stored until the amount thereof reaches a predetermined amount. Then, the process proceeds to operation 12 of Figure1 in operation 26.

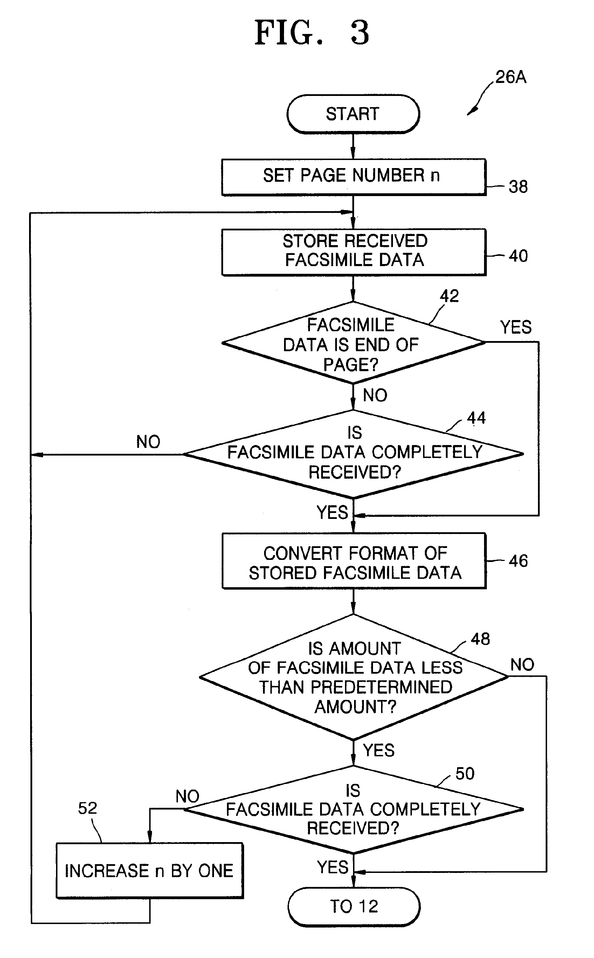

Referring to Figure 3, an example 26A of operation 26 shown in Figure 2 comprises storing the raw facsimile data in operations 38 to 40 and proceeding to operation 12 of Figure1 in accordance with the result of comparing the amount of stored facsimile data and the predetermined amount, if a page end in the facsimile data has been reached or if the facsimile data has been completely received in operations 42 to 52.

If it is determined that facsimile data is being received in operation 24, the received page number n set to an initial value "1" in operation 38. After operation 38 is performed, the received facsimile data is stored in operation 40. Operation 38 may be omitted from the process 26A shown in Figure 3. In this case, if it is determined that the facsimile data is being received in operation 24, the received facsimile data is stored in operation 40.

After operation 40 is performed, it is determined whether the currently received facsimile data is an end of a page of the facsimile document in operation 42. If it is determined that the received facsimile data is not a page end, it is determined whether the facsimile data has been completely received in operation 44. The determination that the facsimile data has been completely received determines whether the facsimile document, transmitted from the outside source, has been completely received. If it is determined that the facsimile data has not been completely received, the process proceeds to operation 40.

However, if it is determined that the currently received facsimile data is page end or if it is determined that the facsimile data has been completely received, the raw stored facsimile data is converted in operation 46. The format of the stored facsimile data is converted in units of a page. That is, the format of the stored facsimile data is converted page by page in operation 46.

After operation 46 is performed, it is determined whether the amount of the converted facsimile data is less than a predetermined amount in operation 48.

According to this embodiment of the present invention, operation 46 can be omitted from the process 26A shown in Figure 3. In this case, if it is determined that the facsimile data is at a page end or if it is determined that the facsimile data has been completely received, it is determined whether the amount of the stored raw facsimile data is less than the predetermined amount, instead of the converted format, in operation 48.

If it is determined that the amount of the stored facsimile data is less than the predetermined amount, it is determined whether the facsimile data has been completely received in operation 50. At this time, if it is determined that the facsimile data has not been completely received, the page number n is increased by one and the process proceeds to operation 40 in operation 52. However, if it is determined that the amount of the stored facsimile data is more than the predetermined amount or if it is determined that the facsimile data has been completely received, the process 26A proceeds to operation 12 of Figure 1.

As described above, if operation 38 is omitted from the process 26A shown in Figure 3, operation 52 is may also be omitted. In this case, if it is determined that the facsimile data has not been completely received in operation 50, the process proceeds to operation 40.

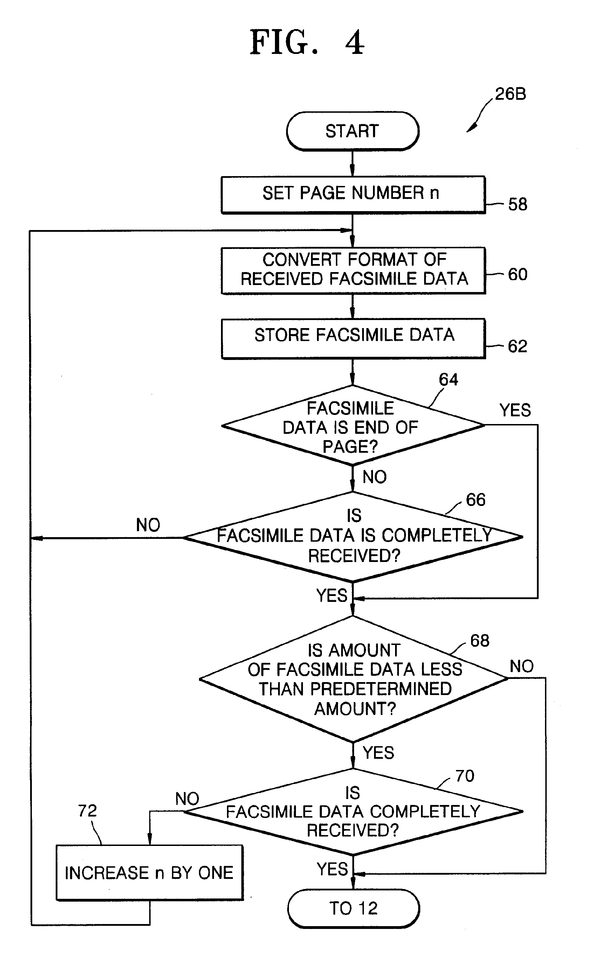

Referring to Figure 4, another example 26B of operation 26 shown in Figure 2 comprises converting the raw facsimile data before it is stored in operations 58 to 62 and proceeding to operation 12 according to the result of comparing the amount of the converted facsimile data and the predetermined amount, if the facsimile data is at end of a page of the facsimile document or if the facsimile data has been completely received in operations 64 to 72.

If it is determined that the facsimile data is being received in operation 24, the page number n of the facsimile data is set in operation 58. After operation 58 is performed, the raw received facsimile data is converted into another format in operation 60.

In operation 46, shown in Figure 3, or in operation 60, shown in Figure 4, the format of the received facsimile data can be converted into a Tagged Image File Format (TIFF), for example.

According to the present invention, operation 58 can be omitted from the process 26B shown in Figure 4. In this case, if it is determined that the facsimile data is being received in operation 24, the raw received facsimile data is converted into another format in operation 60.

After operation 60 is performed, the converted facsimile data, for example TIFF data, is stored in operation 62. After operation 62 is performed, it is determined whether the currently received facsimile data at the end of a page in operation 64. In operation 42, shown in Figure 3, or in operation 64, shown in Figure 4, for example, it can be determined whether the received facsimile data is a page end by, for example, detecting an End Of Page (EOP) code indicating the end of a page.

If it is determined that the facsimile data is not at the end of the page, it is determined whether the facsimile data has been completely received in operation 66. If it is determined that the facsimile data has not been completely received, the process proceeds to operation 60.

However, if the facsimile data is at the end of a page or if the facsimile data has been completely received, it is determined whether the amount of the stored converted facsimile data is less than a predetermined amount in operation 68.

If the amount of the stored converted facsimile data is less than the predetermined amount, it is determined whether the facsimile data has been completely received in operation 70. If the facsimile data has not been completely received, the page number n is increased by one and the process proceeds to operation 60.

If it is determined that the amount of the stored facsimile data is more than the predetermined amount or if it is determined that the facsimile data has been completely received, the process 26B proceeds to operation 12.

As described above, if operation 58 is omitted from the process 26B shown in Figure 4, operation 72 is also omitted. In this case, if it is determined that the facsimile data has not been completely received in operation 70, the process proceeds to operation 60.

In process 26A of Figure 3, the format of the stored facsimile data is converted if it is determined that the facsimile data is at the end of a page in operation 42 or if it is determined that the facsimile data has been completely received in operation 44. Contrary to the process 26A shown in Figure 3, operation 46 involves converting the format of the facsimile data before it is stored and then the process 26A proceeds to operation 12, if it is determined that the amount of the facsimile data is more than a predetermined amount in operation 48 or if it is determined that the facsimile data has been completely received in operation 50. In this case, if it is determined that the facsimile data is at the end of the page in operation 42 or if it is determined that the facsimile data has been completely received in operation 44, it is determined whether the amount of the facsimile data stored in operation 40 is less than the predetermined amount in operation 48.

Similarly, the format of the received facsimile data can be converted if it is determined that the amount of the facsimile data is more than the predetermined amount in operation 68 or if it is determined that the facsimile data has been completely received in operation 70. In this case, the raw facsimile data is stored in operation 62, instead of performing operation 60 after operation 58 is performed. Accordingly, the raw facsimile data is compared with the predetermined amount.

After operation 10, if the amount of the received facsimile data is more than the predetermined amount or if the facsimile data has been completely received, the stored facsimile data is included in an email and transmitted to a predetermined recipient address via the mail server in operation 12.

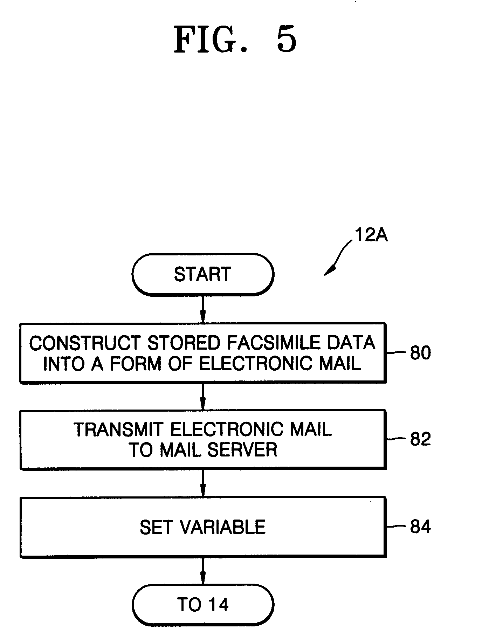

Referring to Figure 5, an example 12A of operation 12 shown in Figure 1 comprises converting the including the stored facsimile data in an email and transmitting the email in operations 80 to 82 and setting a variable in operation 84.

Referring to Figures 1 to 5, if it is determined that the amount of the received facsimile data is more than the predetermined amount in operations 48 or 68, shown respectively in Figure 3 or 4, or if it is determined that the facsimile data has been completely received in operation 50 or 70, the stored facsimile data is included in an email in operation 80. The facsimile data can be included as an attachment operation 80. Also, in a case where the process 26A, shown in Figure 3, includes operations 38 and 52 or the process 26B, shown in Figure 4, includes operations 58 and 72, the email may be constructed according to a set page number or an increased page number n. According to the present invention, an identification factor to identify the facsimile data corresponding to the facsimile document from different facsimile data corresponding to a different facsimile document can be included in the email in operation 80. Hostnames or IP addresses of first and second servers, users' addresses, passwords, email addresses, etc. required to construct the email, can be preset in the network facsimile. Also, the identification factor can be included in a standard header, a non-standard header or the subject line of the email.

After operation 82 is performed, the email is transmitted to an SMTP mail server in operation 82.

After operation 82 is performed, a variable indicating that the facsimile data are been included in an email transmitted to the mail server is set in operation 84.

After operation 12 is performed, it is determined whether the facsimile data has been completely received in operation 14. If the facsimile data has not been completely received, the process 12A proceeds to operation 10. However, if it is determined that the facsimile data has been completely received, the network facsimile operation method shown in Figure 1 is terminated.

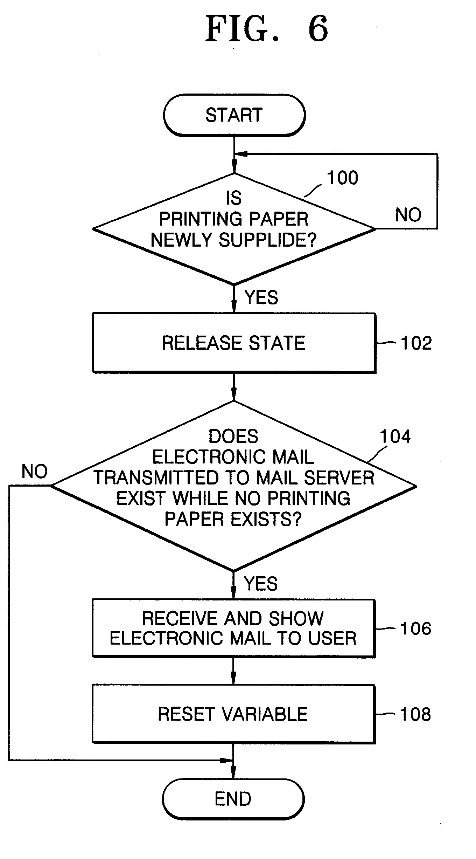

Referring to Figure 6, another method of operating a network facsimile comprises receiving an email transmitted to a main server and displaying the received email to a user when printing paper is newly supplied in operations 100 to 108.

Operations 100 to 108, shown in Figure 6, can be performed in the network facsimile performing the network facsimile operation method shown in Figure 1. In this case, if it is determined that there is printing paper in operation 20 of Figure2, the operation method shown in Figure 6 is performed.

Referring to Figures 1 to 6, it is determined whether printing paper has been newly supplied in operation 100, after it is determined that there is no printing paper. For example, as shown in Figure 2, it is assumed that the process of the method 10A includes operation 22. That is, it is assumed that a flag indicating that there is no printing paper is set in operation 22, when there is no printing paper. At this time, if it is determined that there is printing paper, it is determined whether the flag is set in operation 100. For example, if the flag is set when it is determined that there is printing paper, it represents that printing paper has newly been supplied. However, if the flag is not set when it is determined that there is printing paper, it represents that there has continuously been printing paper. In this case, the received facsimile data is printed according to the conventional facsimile function of the network facsimile.

If it is determined that printing paper is newly supplied, i.e. if the flag is set when it is determined that there is printing paper, the flag indicating that there is no printing paper is reset in operation 102. After operation 102 is performed, it is determined whether an email was transmitted to the mail server, while there was no printing paper, in operation 104. That is, it is determined whether an email, transmitted to the mail server without having been yet displayed to a user, exists.

According to the present invention, operation 102 can be omitted from the operation method shown in Figure 6. In this case, if it is determined that printing paper is newly supplied, it is determined whether an email, transmitted to the mail server exists in operation 104. If no email transmitted to the mail server exists, the network facsimile operation method shown in Figure 6 is terminated. However, if it is determined that the email transmitted to the receiving mail server exists, the corresponding email is received from the sending mail server and shown to the user in operation 106. The email can be shown to the user using a display screen or printed on paper. At this time, the email can be received from the sending (POP3 or IMAP4) mail server. The email received in operation 106 may be an email other than the email transmitted to the receiving mail server when there was no printing paper. It can be determined through the identification factor whether the received email is the email transmitted to the mail server when there was no printing paper or another email.

According to an aspect of the present invention, in the case where the process 12A of Figure 5 includes operation 84 as described above, it can be determined whether the variable is set in order to determine whether the email has been transmitted to the mail server when there was no printing paper. If an email is transmitted to the receiving (SMTP) mail server, the variable is set. Accordingly, if the variable is set, the email is received from the sending mail server and shown to the user in operation 106. After all the emails have been shown to the user, the variable is reset in operation 108.

According to another aspect of the present invention, in the case where the process 12A of Figure 5 does not include operation 84, a search of the sending mail server is performed in order to determine whether an email has been transmitted to the receiving mail server when there was no printing paper. In this case, the operation method shown in Figure 6 does not include operation 108.

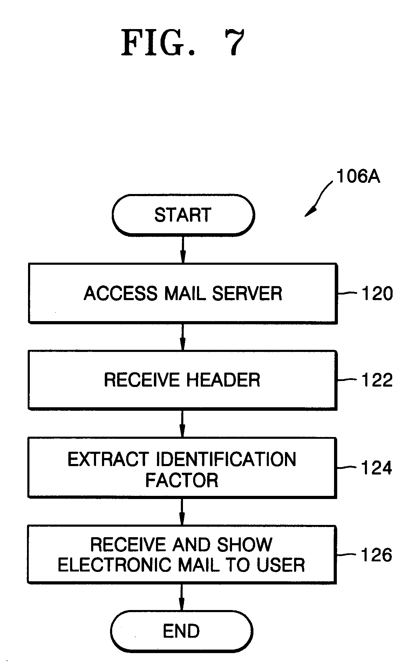

Referring to Figure 7, an example 106A of performing operation 106, shown in Figure 6, comprises accessing a sending mail server and receiving a header in operations 120 to 122 and receiving and displaying a corresponding email using an extracted result of an identification factor for a user in operations 124 to 126.

Referring to Figures 1-7, if it is determined that an email, transmitted to the receiving mail server, exists, the network facsimile accesses the sending mail server in operation 120. After operation 120, the network facsimile receives the email's header from the accessed mail server in operation 122. After operation 122, the identification factor is extracted from the header in operation 124. After operation 124, the email, corresponding to the facsimile document divided into units of one page and transmitted to the receiving mail server, is received from the sending mail server, using the extracted identification factor, in operation 126. The received email is displayed to the user in operation 126.

The construction and operations of a network facsimile will now be particularly described with reference to the accompanying drawings.

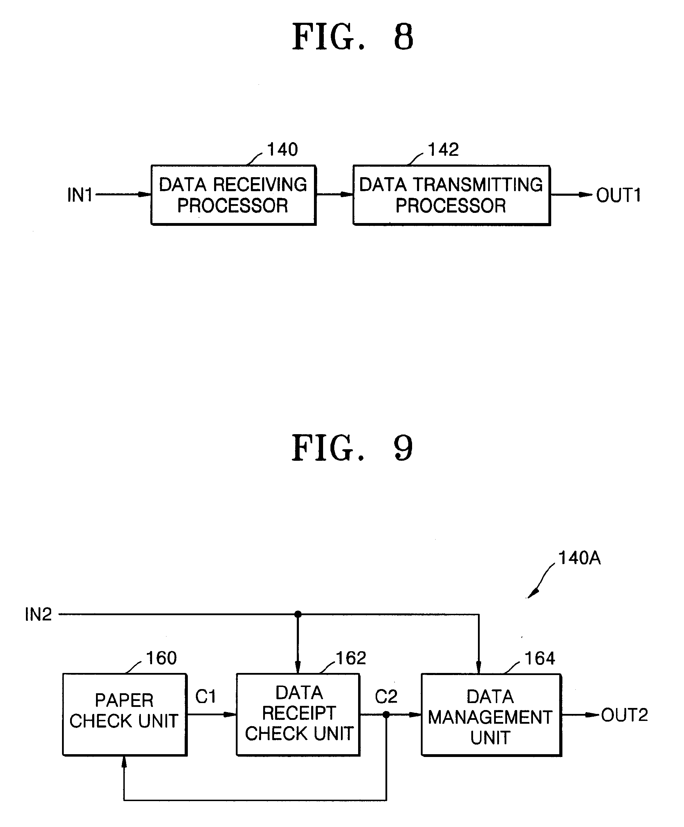

Referring to Figure 8, a network facsimile to the present invention comprises a data receiving processor 140 and a data transmitting processor 142.

The network facsimile shown in Figure 8 performs the operational method shown in Figure 1.

First, the data receiving processor 140 performs operations 10 to 14 shown in Figure 1. To perform operation 10 of Figure 1, the data receiving processor 140 checks whether there is printing paper for printing facsimile data, whether any facsimile data is being received and whether the amount of the received facsimile data is more than a predetermined amount. Then, the data receiving processor 140 receives, through an input terminal IN1, and stores the facsimile data in response to first, second and third control signals C1, C2 and C3 corresponding to the above checked results. The data receiving processor 140 outputs the stored facsimile data to the data transmitting processor 142 in response to the third control signal C3. Next, to perform operation 14, the data receiving processor 140 checks whether the facsimile data has been completely received and generates the check result as a fourth control signal C4. In this case, the data receiving processor 140 receives, through the input terminal IN1, and stores the facsimile data in response to the fourth control signal C4 or outputs the stored facsimile data to the data transmitting processor 142.

Referring to Figure 9, an example 140A data receiving processor 140 comprises a paper check unit 160, a data receipt check unit 162 and a data management unit 164.

The data receiving processor 140A performs operations 20, 24 and 26 in the process 10A shown in Figure 2.

To perform operation 20, the paper check unit 160 of the data receiving processor 140A checks whether there is printing paper, in response to the second control signal C2 received from the data receipt check unit 162, and outputs the check result, as the first control signal C1, to the data receipt check unit 162.

To perform operation 24, the data receipt check unit 162 checks whether facsimile data has been received through an input terminal IN2, in response to the first control signal C1 and outputs the check result, as the second control signal C2, to the paper check unit 160 and the data management unit 164. For example, if it is determined by the first control signal C1 that there is no printing paper, the data receipt check unit 162 checks whether the facsimile data is received. If it is determined through the second control signal C2 that facsimile data is not being received, the paper check unit 160 again checks whether there is printing paper.

To perform operation 26, the data management unit 164 stores and manages the facsimile data received through the input terminal IN2 in response to the second control signal C2. For example, if it is determined by the second control signal C2 that facsimile data is being received, the data management unit 164 stores and manages the facsimile data received through the input terminal IN2.

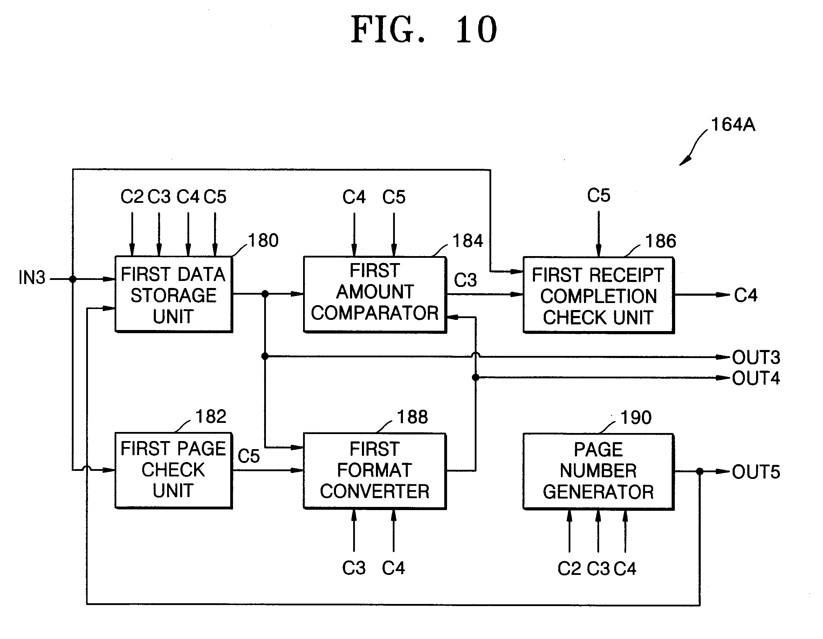

Referring to Figure 10, an example 164A data management unit 164 comprises a first data storage unit 180, a first page check unit 182, a first amount comparator 184, a first receipt completion check unit 186, a first format converter 188 and a page number generator 190.

The data management unit 164A shown in Figure 10 performs the process 26A shown in Figure 3.

To perform operation 38, the page number generator 190 of the data management unit 164A sets the page number n of the facsimile data in response to the second control signal C2 received from the data receipt check unit 162. For example, if it is determined from the second control signal C2 that the facsimile data is being received, the page number generator 190 sets the page number n and outputs the set page number n through an output terminal OUT5 to the first data storage unit 180. Also, to perform operation 52, the page number generator 190 increases the page number n by one, in response to the third control signal C3 received from the first amount comparator 184 and the fourth control signal C4 received from the first receipt completion check unit 186, and outputs the increased page number through an output terminal OUT5 to the first data storage unit 180. For example, if it is determined by the third control signal C3 that the amount of the facsimile data is less than the predetermined amount and when it is determined by the fourth control signal C4 that the facsimile data has not been completely received, the page number generator 190 increases the page number n by one.

In the case where the process of the method 26A shown in Figure 3 includes operations 38 and 52, to perform operation 40, the first data storage unit 180 receives and stores the facsimile data through the input terminal IN3 when the set page number or the increased page number is received from the page number generator 190.

In the case where the process 26A shown in Figure 3 does not include operations 38 and 52, the data management unit 164A shown in Figure 10 does not include the page number generator 190. In this case, to perform operation 40, the first data storage unit 180 stores the facsimile data received through the input terminal IN3 in response to the second control signal C2 or the fourth control signal C4. For example, if it is determined by the second control signal C2 that the facsimile data is received in operation 24, or if it is determined by the fourth control signal C4 that the facsimile data has not been completely received in operation 50, the first data storage unit 180 receives and stores the facsimile data through the input terminal IN3.

To perform operation 40, regardless of whether the data management unit 164A shown in Figure 10 includes the page number generator 190, the first data storage unit 180 stores the facsimile data, received through the input terminal IN3, in response to the fourth control signal C4 and a fifth control signal C5. For example, if it is determined by the fourth and the fifth control signals C4 and C5 that the facsimile data is not the end of a page of the facsimile document and the facsimile data has not been completely received according to operations 42 and 44 respectively, the first data storage unit 180 stores the facsimile data received through the input terminal IN3.

The first data storage unit 180 reads the stored facsimile data. That is, in the case where the data management unit 164A shown in Figure 10 does not include the first format converter 188, if it is determined by the third control signal C3 that the amount of the facsimile data is more than the predetermined amount, the first data storage unit 180 outputs the stored facsimile data to the data transmitting processor 142 through the output terminal OUT3. If it is determined by the fourth control signal C4 that the facsimile data has been completely received in operation 50, the first data storage unit 180 outputs the stored facsimile data through the output terminal OUT3.

To perform operation 42 shown in Figure 3, the first page check unit 182 checks whether the facsimile data input through the input terminal IN3 corresponds to the end of a page of the facsimile document to be printed and outputs the check result as the fifth control signal C5 to the first data storage unit 180, the first receiving completion check unit 186, and the first format converter 188.

To perform operation 44, the first receipt completion check unit 186 checks whether the facsimile data, received through the input terminal IN3, has been completely received, in response to the fifth control signal C5, received from the first page check unit 182, and outputs the checked result as the fourth control signal C4 to the first data storage unit 180, the first format converter 188 and the page number generator 190. For example, if it is determined by the fifth control signal C5 that the facsimile data is not at the end of a page, the first receipt completion check unit 186 checks whether the facsimile data has been completely received. To perform operation 50, the first receipt completion check unit 186 checks whether the facsimile data has been completely received, in response to the third control signal C3. For example, if it is determined by the third control signal C3 that the amount of the facsimile data is less than the predetermined amount, the first receipt completion check unit 186 checks whether the facsimile data has been completely received through the input terminal IN3.

To perform operation 46, the first format converter 188 converts a format of the stored facsimile data received from the first data storage unit 180 in response to the fifth control signal C5 received from the first page check unit 182 or the fourth control signal C4 received from the first receipt completion check unit 186 and outputs the converted facsimile data to the first amount comparator 184. For example, if it is determined by the fifth control signal C5 that the facsimile data is at the end of a page in operation 42 or by the fourth control signal C4 that the facsimile data has been completely received in operation 44, the first format converter 188 converts the format of the stored facsimile data, received from the first data storage unit 180. The first format converter 188 outputs the converted facsimile data to the data transmitting processor 142 through the output terminal OUT4 in response to the third and fourth control signals C3 and C4. For example, if it is determined by the third control signal C3 that the amount of the facsimile data is more than the predetermined amount, or by the third and fourth control signals C3 and C4 that the amount of the facsimile data is less than predetermined amount but the facsimile data has been completely received, the first format converter 188 outputs the converted facsimile data to the data transmitting processor 142 through the output terminal OUT4.

To perform operation 48, the first amount comparator 184 compares the amount of the stored converted facsimile data, received from the first format converter 188, with the predetermined amount and outputs the comparison result as the third control signal C3 to the first data storage unit 180, the first receipt completion check unit 186 and the first format converter 188.

As described above, in a case where process 26A shown in Figure 3 does not include step 46, the first amount converter 184 compares the amount of the stored facsimile data, received from the first data storage unit 180, with the predetermined amount, in response to the fourth and the fifth control signals C4 and C5, and outputs the comparison result as the third control signal C3. For example, if it is determined by the fourth control signal C4 that the facsimile data has been completely received, or by the fifth control signal C5 that the facsimile data is at the end of a page, the first amount comparator 184 compares the amount of the stored facsimile data with the predetermined amount.

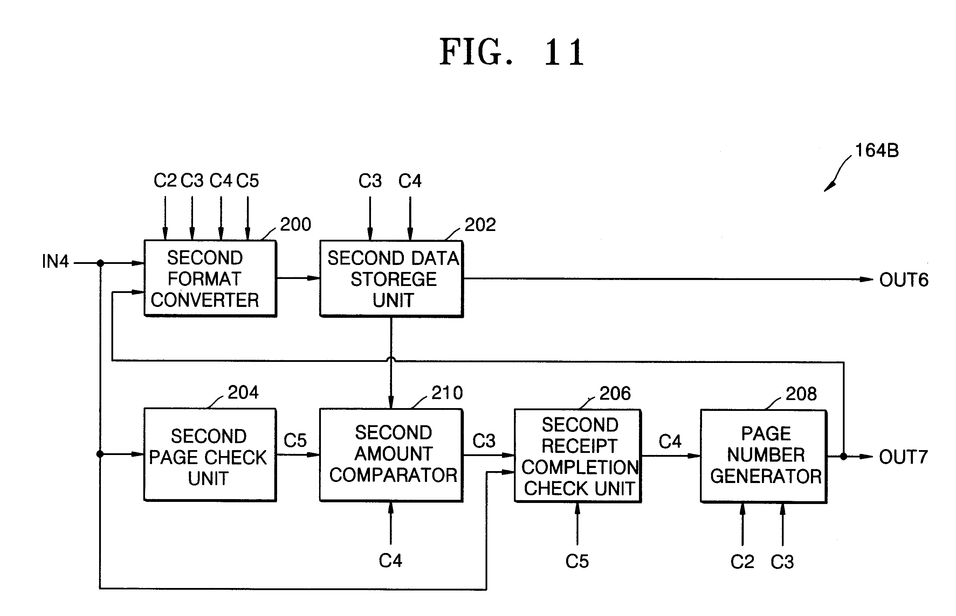

Referring to Figure 11, another example 164B data management unit 164 comprises a second format converter 200, a second data storage unit 202, a second page check unit 204, a second receipt completion check unit 206, a page number generator 208 and a second amount comparator 210.

The data management unit 164B shown in Figure 11 operates to perform process 26B shown in Figure 4.

To perform operation 58, the page number generator 208 of the data management unit 164B sets the page number n of the facsimile data in response to the second control signal C2, received from the data receipt check unit 162. For example, if it is determined by the second control signal C2 that the facsimile data is being received, the page number generator 208 sets the page number n and outputs the set page number n through an output terminal OUT7 to the second format converter 200. To perform operation 72, the page number generator 208 increases the page number n by one in response to the third control signal C3, received from the second amount comparator 210, and the fourth control signal C4, received from the second receipt completion check unit 206, and outputs the increased page number through the output terminal OUT7. For example, when it is determined by the third control signal C3 that the amount of the facsimile data is less than the predetermined amount and if it is determined by the fourth control signal C4 that the facsimile data has not been completely received, the page number generator 208 increases the page number n by one.

In the case where the process 26B shown in Figure 4 includes operations 58 and 72, to perform operations 60, the second format converter 200 converts the format of the facsimile data, received through the input terminal IN4, when the set page number or the page number increased by one is received from the page number generator 208 and outputs the converted facsimile data to the second data storage unit 202.

In the case where the process 26B shown in Figure 4 does not include operations 58 and 72, the data management unit 164B shown in Figure 11 does not include the page number generator 208. To perform operations 60, the second format converter 200 converts the format of the facsimile data, received through the input terminal IN4, in response to the second control signal C2 or the third and fourth control signals C3 and C4. For example, if it is determined that the facsimile data has not been completely received, when it is determined by the second control signal C2 that the facsimile data is being received or by the third and fourth control signals C3 and C4 that the amount of the facsimile data is less than the predetermined amount, the second format converter 200 converts the format of the facsimile data, received through the input terminal IN4.

To perform operation 60 regardless of whether the data management unit 164B includes the page number generator 208, the second format converter 200 converts the format of the facsimile data, received through the input terminal IN4, in response to the fourth and fifth control signals C4 and C5. For example, if it is determined by the fourth and fifth control signals C4 and C5 that the facsimile data is at the end of a page or the facsimile data has been completely received, the second format converter 200 converts the format of the facsimile data.

To perform operation 62, the second data storage unit 202 stores the converted format of the facsimile data, received from the second format converter 200. The second data storage unit 202 reads and transmits the stored facsimile data to the data transmitting processor 142 shown in Figure 8 through the output terminal OUT6 in response to the third or fourth control signal C3 or C4. That is, if it is determined by the third control signal C3, received from the second amount comparator 210, that the amount of the facsimile data is more than the predetermined amount, the second data storage unit 202 outputs the stored facsimile data through the output terminal OUT6. If it is determined by the fourth control signal C4, received from the second receipt completion check unit 206 that the facsimile data has been completely received, the second data storage unit 202 outputs the facsimile data through the output terminal OUT6.

The first data storage unit 180 shown in Figure 10 and the second data storage unit 202 shown in Figure 11 may be dynamic random access memories (DRAMs). The first or second data storage unit 180 or 202 reads the storing facsimile data and then removes the stored facsimile data in order to store the following received facsimile data.

To perform operation 64 shown in Figure 4, the second page check unit 204 checks whether the facsimile data received through the input terminal IN4 corresponds to the end of each page of the facsimile document to be printed, and outputs the checked result as the fifth control signal C5 to the second format converter 200, the second receipt completion checker 206, and the second amount comparator 210.

To perform operation 66, the second receipt completion check unit 206 checks whether the facsimile data has been completely received through the input terminal IN4, in response to the fifth control signal C5 received from the second page check unit 204, and outputs the checked result as the fourth control signal C4. For example, if it is determined by the fifth control signal C5 that the facsimile data does not correspond to the end of the page, the second receipt completion checker 206 checks whether the facsimile data has been completely received. Also, to perform operation 70, the second receipt completion check unit 206 checks whether the facsimile data has been completely received, in response to the third control signal C3, and outputs the checked result as the fourth control signal C4. For example, if it is determined by the third control signal C3 that the amount of the facsimile data is less than the predetermined amount, the second receipt completion check unit 206 checks whether the facsimile data has been completely received through the input terminal IN4.

To perform operation 68, the second amount comparator 210 compares the amount of the stored converted facsimile data, received from the second data storage unit 202, with the predetermined amount in response to the fourth and fifth control signals C4 and C5, or only the fifth control signal C5, and outputs the comparison result as the third control signal C3 to the second format converter 200, the second data storage unit 202, the second receipt completion check unit 206 and the page number generator 208. For example, if it is determined by the fourth and fifth control signals C4 and C5 that the facsimile data has not been completely received when the facsimile data is not at the end of the page, or by the fifth control signal C5 that the facsimile data is at the end of the page, the second amount comparator 210 compares the amount of the facsimile data received from the second data storage unit 202 with the predetermined amount.

To perform operation 12 shown in Figure 1, the data transmitting processor 142 shown in Figure 8 converts the stored facsimile data, received from the data receiving processor 140, into the form of the email, and transmits the email to the mail server through the output terminal OUT1. At this time, in a case where the data management unit 164A or 164B shown in Figure 10 or Figure 11 includes the page number generator 190 or 208, the data transmitting processor 142 receives the page number output from the page number generator 190 or 208 through the output terminal OUT5 or OUT7, and constructs the email, according to the received page number.

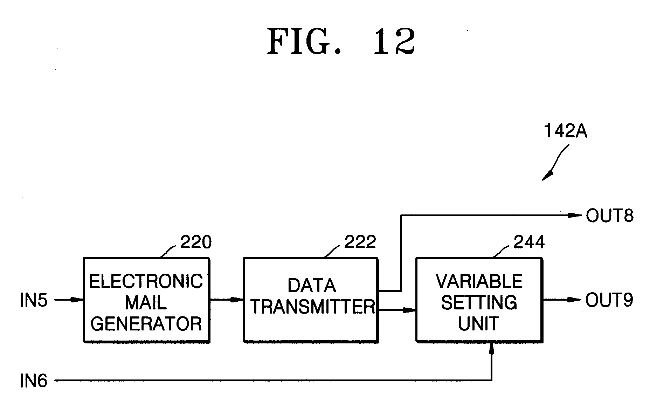

Referring to Figure 12, an example 142A data transmitting processor 142 comprises an email generator 220, a data transmitter 222 and a variable setting unit 224.

The data transmitting processor 142A performs the process 12A shown in Figure 5.

To perform operation 80, the email generator 220 of the data transmitting processor 142A includes the stored facsimile data, received from the data receiving processor 140 through the input terminal IN5, in an email and outputs the email to the data transmitter 222. The email generator 220 includes an identification factor to identify the facsimile data, corresponding to the same facsimile document from another facsimile data later, in the email.

To perform operation 82, the data transmitter 222 transmits the email, received from the email generator 220, to the receiving mail server through the output terminal OUT8.

To perform operation 84, the variable setting unit 224 sets the variable, indicating that the facsimile data has been transmitted in an email to the receiving mail server, in response to a data transmission completion signal, and outputs the set variable through the output terminal OUT9. The data transmission completion signal indicates that the data transmitter 222 has completely transmitted the data.

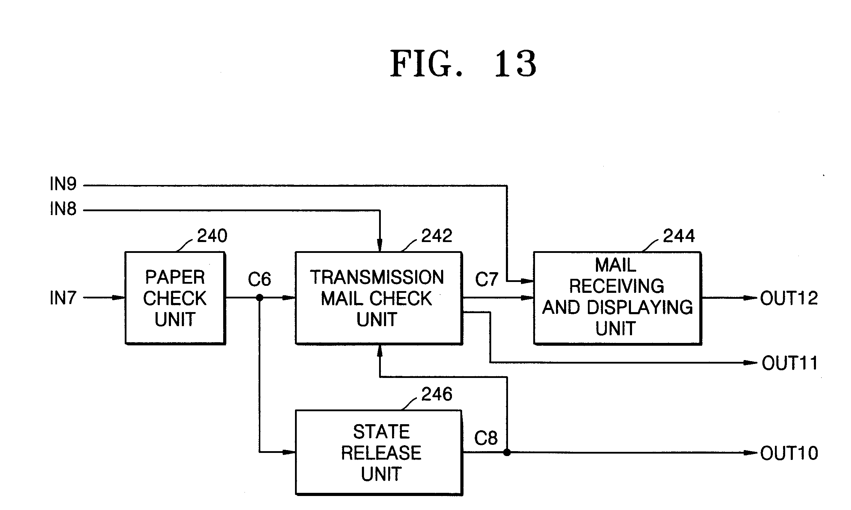

Referring to Figure 13, the network facsimile comprises a paper check unit 240, a transmission mail check unit 242, a mail receiving and displaying unit 244 and a state release unit 246.

The network facsimile shown in Figure 13 performs the method shown in Figure 6 and may be included in the network facsimile shown in Figure 8.

To perform operation 100, the paper check unit 240, shown in Figure 13, checks whether printing paper has been newly supplied, after it has been determined that no printing paper exists, and outputs the check result as a sixth control signal C6 to the transmission mail check unit 242 and the state release unit 246.

For example, the data receiving processor 140 shown in Figure 8 generates a flag signal, indicating that no printing paper exists, when it is determined that no printing paper exists. The paper check unit 240 checks whether the state signal is received through the input terminal IN7, in response to the first control signal C1 received from the data receiving processor 140 through the input terminal IN7, and outputs the checked result as the sixth control signal C6. For example, if it is determined by the first control signal C1 that the printing paper exists, the paper check unit 240 checks whether the generated state signal is received.

Meanwhile, according to an aspect of the present invention as described above, if the operation method shown in Figure 6 does not include operation 102, the network facsimile shown in Figure 13 also does not include the state release unit 246. In this case, to perform operation 104, the transmission mail check unit 242 checks whether an email was transmitted to the mail server exists when no printing paper existed, in response to the sixth control signal C6 received from the paper check unit 240, and outputs the check result as a seventh control signal C7 to the mail receiving and displaying unit 244. For example, if it is determined by the sixth control signal C6 that the printing paper has been newly supplied, after it has been determined that there is no printing paper, the transmission mail check unit 242 checks whether email transmitted to the mail server exists.

In the case where the operation method shown in Figure 6 includes operation 102, as shown in Figure 13, the network facsimile includes the flag reset unit 246. To perform operation 102, the flag reset unit 246 generates an eighth control signal C8 to stop the generation of the flag signal in response to the sixth control signal C6, received from the paper check unit 240. The state release unit 246 outputs the generated eighth control signal C8 to the transmission mail check unit 242 and simultaneously to the data receiving processor 140 through an output terminal OUT10. In this case, the data receiving processor 140 stops generating the flag signal in response to the eighth control signal C8, received from the flag reset unit 246. The transmission mail check unit 242 checks whether an email transmitted to the receiving mail server exists in response to the eighth control signal C8. For example, if it is determined by the eighth control signal C8 that the data receiving processor 140 attempts to stop generating the flag signal, the transmission mail check unit 242 checks whether an email transmitted to the mail server exists.

To perform operation 104, the transmission mail check unit 242 shown in Figure 13 checks whether the variable, received from the variable setting unit 224 is set, and can output the check result as the seventh control signal C7. The data transmitting processor 142A shown in Figure 12 includes the variable setting unit 224.

According to another aspect of the present invention, to perform operation 104, the transmission mail check unit 242 can search for the mail server and generate the seventh control signal C7. The transmitting mail check unit 242 sends the mail server through an output terminal OUT11 a query signal regarding whether there exists the email transmitted to the mail server when it is determined that there is no printing paper. At this time, the transmission mail check unit 242 receives information related to whether there is the email transmitted from the mail server, through the input terminal IN8.

To perform operation 106 shown in Figure 6, the mail receiving and displaying unit 244 receives the email from the sending mail server through the input terminal IN9 in response to the seventh control signal C7, received from the transmission mail check unit 242, and outputs the received email to the user through an output terminal OUT12. For example, if it is determined by the seventh control signal C7 that a transmitted email exists, the mail receiving and displaying unit 244 receives and displays the email.

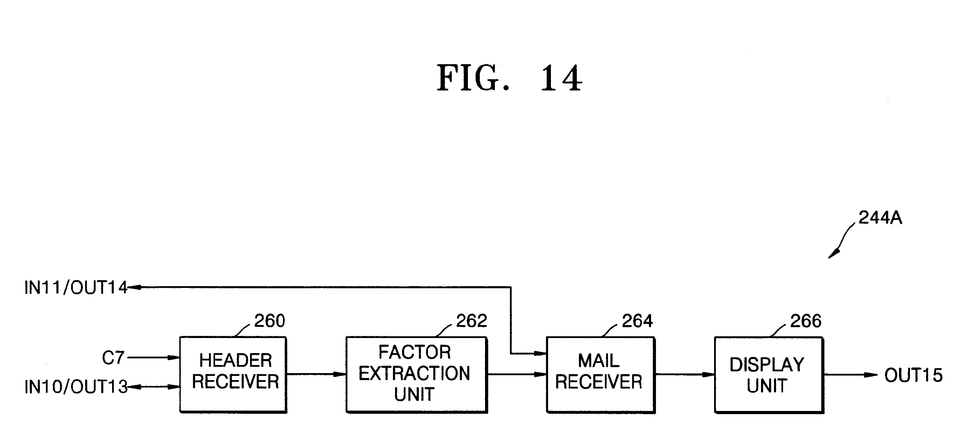

Referring to Figure 14, an example 244A mail receiving and displaying unit 244 comprises a header receiver 260, a factor extraction unit 262, a mail receiver 264 and a display unit 266.

The mail receiving and displaying unit 244A shown in Figure 14 performs the process 106A shown in Figure 7.

To perform operation 120 and operation 122, the header receiver 260 of the mail receiving and displaying unit 244A accesses the sending mail server and receives a header, in response to the seventh control signal C7, received from the transmission mail check unit 242. For example, if it is determined by the seventh control signal C7 that an email, transmitted to the mail server exists, the header receiver 260 accesses the mail server and receives the header. For example, the header receiver 260 outputs an access request signal to the mail server through an output terminal OUT13, and receives an access authorisation signal from the mail server through the input terminal IN10. After accessing the mail server, the header receiver 260 receives the header from the mail server through the input terminal IN10.

To perform operation 124, the factor extractor 262 extracts the identification factor from the header, received from the header receiver 260, and outputs the extracted identification factor to the mail receiver 264.

To perform operation 126, the mail receiving and displaying unit 244A includes the mail receiver 264 and the display unit 266. The mail receiver 264 recognizes at least one email belonging to the same facsimile document divided and transmitted to the mail server using the identification factor extracted from the factor extractor 262, and receives the recognized email from the mail server through the input terminal IN11. The mail receiver 264 transmits information representing the recognized email to the sending mail server through an output terminal OUT14. The mail server reads only the emails belonging to the same facsimile document, corresponding to the information received from the mail receiver 264, and outputs it to the mail receiver 264. The display unit 266 shows the mail, received from the mail receiver 264, to the user through an output terminal OUT15. For example, the display unit 266 shows the email to the user by displaying the email on a screen of a monitor or by printing the email on printing paper.

To perform operation 108, the variable setting unit 224 of the data transmitting processor 142A resets the variable in response to a data display completion signal received from the mail receiving and displaying unit 244 through the input terminal IN6. For example, if it is determined by the display completion received signal from the mail receiving and displaying unit 244 that the email has been received and displayed, the variable setting unit 224 resets the variable.

Assuming that the network facsimile can store up to 50MB of facsimile data, the predetermined amount is 3MB, operation 26 shown in Figure 2 is implemented as shown in Figure 3, a non-standard header is used as the identification factor, the facsimile data is converted into TIFF data in operation 46, and a facsimile document having six pages is transmitted to the network facsimile. The non-standard header can be denoted by X-SamsungDivFaxMail:samsung_200302221020. Here, 200302221020 shows that the time at which the facsimile data was received by the network facsimile is 10:20 am Feb. 22, 2003.

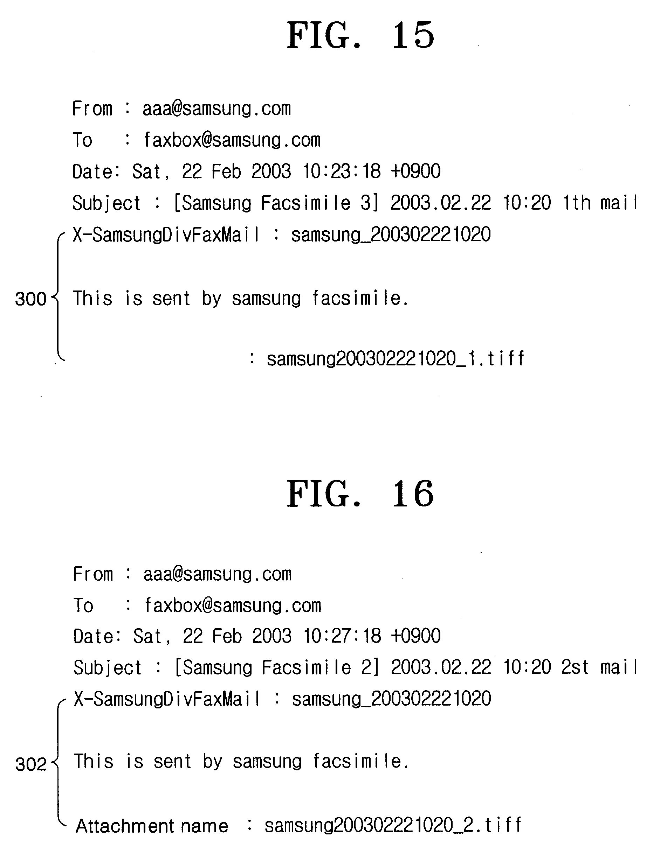

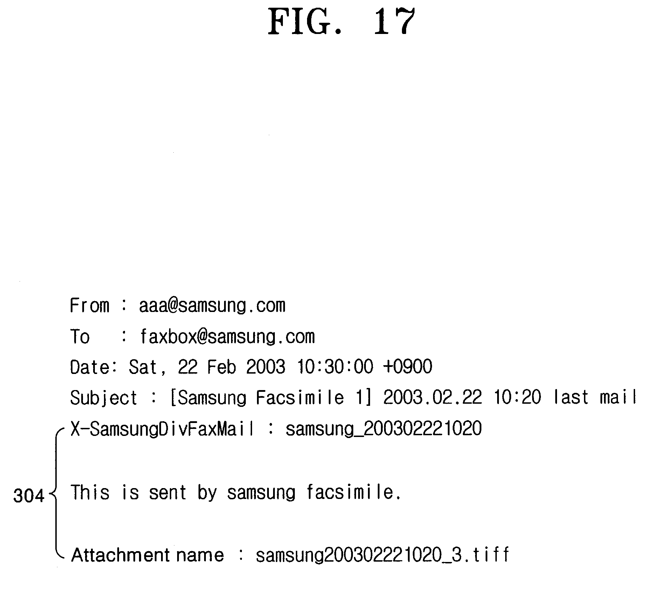

Figures 15-17 show forms of emails into which the facsimile document is divided, and through which the facsimile document is transmitted to the mail server , wherein Figure 15 represents the form of a first email that is transmitted first to the mail server, Figure 16 represents the form of a second email that is transmitted second to the mail server, and Figure 17 represents the form of a third email that is transmitted last to the mail server. In the respective drawings, 'From' represents the network facsimile as a sender, 'To' represents a mailbox designated as a recipient, 'Date' represents the creation date of the email, [samsung Facsimile n] in 'subject' represents that the number of pages attached to the email is n, 'xth mail' represents that the email is the x-th email transmitted to the mail server, contents 300, 302 or 304 of each email includes a sentence "This is sent by samsung facsimile," and '200302221020' in the title of attached file "samsung200302221020_x.tiff" represents the time on which the facsimile data was first received by the receiving mail server, and 'x' represents the sequence position in which the email was transmitted to the mail server.

First, if it is determined that facsimile data of 1MB is received in operation 24 when there is no printing paper, the page number n is set to "one" in operation 38. After operation 38 is performed, the received facsimile data is stored in operation 40. At this time, if the received facsimile data is an end of a first page of the facsimile document, a format of the facsimile data corresponding to the stored first page is converted in operation 46. Since the amount of the stored facsimile data of 1MB is less than the predetermined amount of 3MB and the facsimile data has not been completely received, the page number n is changed to two and the process proceeds to operation 40 in operation 52. Then, the received facsimile data of 1 MB is stored in operation 40. After operation 40 is performed, the format of the facsimile data corresponding to the stored second page is converted operation 46. Since the amount of the stored facsimile data of 2MB is less than the predetermined amount of 3MB and the facsimile data has not been completely received, the page number n is changed to three and the process proceeds to operation 40 in operation 52. Next, the received facsimile data of a third page with an amount of 1.5MB is stored in operation 40. After operation 40 is performed, the format of the facsimile data corresponding to the third page is converted in operation 46. Since the amount of the stored facsimile data of 3.5MB is greater than the predetermined amount of 3MB, the process proceeds to operation 12. At this time, the three pages with the converted formats are made into an attachment, for example, samsung200302221020_1.tiff holding the three pages, of the electronic mail as shown in Figure 15, and transmitted to the receiving mail server in operations 80 and 82. If the stored facsimile data is transmitted to the mail server, the stored facsimile data for the first through the third pages is deleted.

After the first to third pages are transmitted, if the facsimile data has not been completely received and there is no printing paper, it is determined whether any facsimile data has been received in operation 24. If a fourth page of 1MB is received, the page number n is set to "one" in operation 38. After operation 38 is performed, the received fourth page of facsimile data is stored in operation 40. At this time, if the facsimile data is the end of the page, the format of the stored fourth page of facsimile data is converted in operation 46. Since the amount of the stored facsimile data of 1MB is less than the predetermined amount of 3MB and the facsimile data has not been completely received, the page number n is changed to two and the process proceeds to step 40 in operation 52. At this time, a received fifth page of facsimile data of 2MB is stored in operation 40. After operation 40 is performed, the format of the facsimile data corresponding to the fifth page is converted in operation 46. Since the amount of the stored facsimile data of 3MB is not less than the predetermined amount of 3MB, the process proceeds to operation 12. The fourth and fifth pages with the converted formats are included an attached file, for example, samsung200302221020_2.tiff holding the two pages, of the electronic mail in the format shown in Figure 16, and transmitted to the mail server in operations 80 and 82. When the stored facsimile data is transmitted to the mail server, the stored facsimile data for the fourth and the fifth pages is deleted.

After the fourth and the fifth pages are transmitted, if the facsimile data has not been completely received and there is no printing paper, it is determined whether any facsimile data has been received in operation 24. If a sixth page with an amount of 1MB is received, the page number n is set to 'one' in operation 38. After operation 38, the received sixth page of the facsimile data is stored in operation 40. At this time, if the facsimile data of 1MB is an end of a page, the format of the stored sixth page of facsimile data is converted in operation 46. Since the facsimile data has been completely received while the amount of the stored facsimile data of 1MB is less than the predetermined amount of 3MB, the process proceeds to operation 12. At this time, the converted sixth page is included as an attached file, i.e., samsung200302221020_3.tiff holding a single page, of the email shown in Figure 17, and transmitted to the mail server on operations 80 and 82. In this case, the "xth" mail marker in the title is 'last mail' indicating the last email. If the facsimile data corresponding to the stored sixth page is transmitted to the mail server, the stored facsimile data corresponding to the sixth page can be removed.

In Figures 15, 16 and 17, the identification factor is the same, so that the emails corresponding to the same facsimile document can be identified as the facsimile document sent from the same network facsimile among the emails to be brought later from the mail server, using the identification factor.

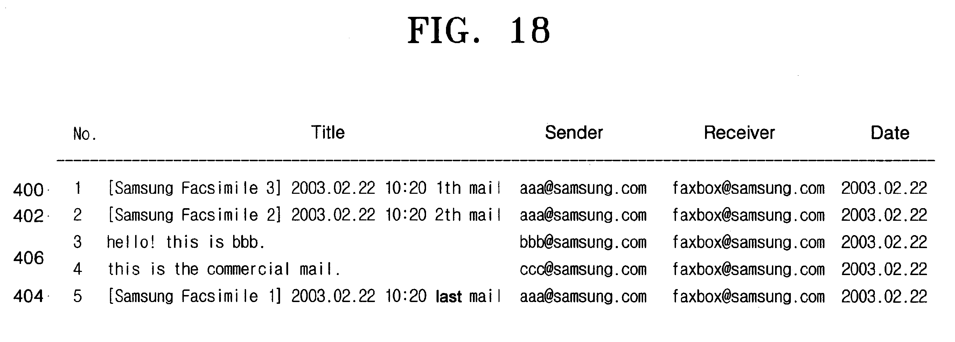

Figure 18 shows examples of the emails stored in the mail server.

As described above, after the sixth page of the facsimile document is transmitted to the mail server when there is no printing paper, if the printing paper has been newly supplied, the network facsimile accesses the sending mail server and receives the email in operation 106. At this time, a general email 406 can or cannot be received by the network facsimile while the network facsimile receives the emails 400, 402, and 404 transmitted to the receiving mail, among the emails shown in Figure 18. This general email 406 may be inserted into a middle of the emails 400, 402, and 404 as shown in Figure 18.

More specifically, when the printing paper is newly supplied, the network facsimile accesses the sending mail server and receives the header of each email in operations 120 and 122. The non-standard header is extracted as the identification factor from the received header in operation 124. At this time, the corresponding emails belonging to the same facsimile document transmitted from the same network facsimile are identified using the extracted non-standard header, among the emails 400, 402, 404 and 406 shown in Figure 18, the transmission order of the corresponding emails to the mail server is identified using the title, and the first transmitted email is first received and printed and the last transmitted email is last received and printed using the identified result in operation 126.

In this case, before the divided pages are printed, information, such as the total number of pages of the facsimile document, the received date and time, etc., may be printed in a form of a banner page.

As described above, according to the network facsimile and the network facsimile operation method of the present invention, it is possible to prevent a received facsimile document from being lost regardless of the received amount of the facsimile document and the storage space, by receiving and simultaneously dividing a large facsimile document into the form of an email and transmitting the divided result when there is no printing paper or the storage space to store the facsimile document is scarce, and then receiving and displaying the facsimile document from a designated mail address to a user when the printing paper is newly supplied.

## Claims

1. A method of using an email system as a supplementary memory for a facsimile machine, the method comprising emailing received fax data from a facsimile machine to a remote location for subsequent retrieval, **characterised in that** a chunk of received fax data is emailed when the facsimile machine is out of paper and the chunk of fax data exceeding a predetermined size has been received.

2. A method according to claim 1, wherein fax data for the end of a document is emailed when the fax machine is out of paper and a preceding chunk of the document was emailed.

3. A method according to claim 1 or 2, wherein including converting received fax data from raw fax data to another format.

4. A method according to claim 1, 2 or 3, wherein the chunk of fax data exceeds said predetermined size when the size of the raw chunk of fax data exceeds said predetermined size.

5. A method according to claim 3, wherein the chunk of fax data exceeds said predetermined size when the size of the format converted chunk of fax data exceeds said predetermined size.

6. A method according to any preceding claim, wherein a chunk consists of an integer number pages of a facsimile document.

7. A method according to any preceding claim, wherein each email comprise a document identifier and a sequence indicator, indicating the position of its contents in the received facsimile document.

8. A method according to any preceding claim, including detecting that the facsimile machine has been loaded with paper and, in response thereto, downloading an email, containing fax data, that had previously been sent from the facsimile machine from the remote location.

9. A method according to claim 8, including printing the fax data in the downloaded email.

10. A facsimile machine comprising document printing means (266), means for receiving facsimile signals (140), data network communication means (222), a memory (180; 202) for storing fax data and control means (164) configured for emailing received fax data to a remote location using the data network communication means (222) for subsequent retrieval, **characterised in that** the control means (164) is configured such that a chunk of received fax data is emailed when the facsimile machine is out of paper and the chunk of fax data exceeding a predetermined size has been received.

11. A method of operating a network facsimile, the network facsimile performing both a function of transmitting and/or receiving an electronic mail to and/or from a mail server and a facsimile function, the method comprising:
storing the received facsimile data until an amount of received facsimile data is more than a predetermined amount if the facsimile data is received from an outside source when there is no printing paper on which the facsimile data is to be printed;
converting the stored facsimile data into a form of an electronic mail and transmitting the converted data to the mail server, if the amount of the received facsimile data is more than the predetermined amount or if the facsimile data is completely received; and
determining whether the facsimile data is completely received, and proceeding to the storing operation if the facsimile data is not completely received.

12. The method of claim 11, wherein the storing of storing the received facsimile data comprises:
determining whether there is the printing paper;
determining whether the facsimile data is received if it is determined that there is no printing paper, and proceeding to the determining operation whether there is the printing paper if the facsimile data is not received; and
storing the received facsimile data until the amount of the received facsimile data is more than the predetermined amount if the facsimile data is determined to be received.

13. The method of claim 12, wherein the operation of storing the received facsimile data comprises:
storing the received facsimile data if the facsimile data is received;
determining whether the facsimile data is an end of a page to be printed or whether the facsimile data is completely received, and proceeding to the operation of storing the received facsimile data if the facsimile data is not the end of the page and the facsimile data is not completely received;
determining whether the amount of the stored facsimile data is less than the predetermined amount and proceeding to the operation of converting the stored facsimile data if the amount of the stored facsimile data is more than the predetermined amount if it is determined that the facsimile data is the end of the page or if the facsimile data is completely received; and
determining whether the facsimile data is completely received if the amount of the stored facsimile data is less than the predetermined amount, proceeding to the operation of storing the received facsimile data if the facsimile data is not completely received, and proceeding to the operation of converting the stored facsimile data if the facsimile data is completely received.

14. The method of claim 13, wherein the operation of storing the received facsimile data further comprises,
converting a format of the stored facsimile data and proceeding to the operation of determining whether the amount of the stored facsimile data is less than the predetermined amount, if the facsimile data is the end of the page or the facsimile data is completely received, and
the operation of determining whether the amount of the stored facsimile data is less that the predetermined amount comprises determining whether an amount of the converted format of facsimile data is less than the predetermined amount, proceeding to the operation of converting the stored facsimile data if the amount of the converted format of facsimile data is more than the predetermined amount, and proceeding to the operation of determining that the facsimile data is completely received if the amount of the converted format of facsimile data is less than the predetermined amount.

15. The method of claim 13, wherein the operation of storing the received facsimile data further comprises:
converting a format of the stored facsimile data and proceeding to the operation of converting the received facsimile data, if the amount of the stored facsimile data is less than the predetermined amount or if the facsimile data is completely received.

16. The method of claim 13, wherein the operation of storing the received facsimile data further comprises:
setting a page number of the facsimile data and proceeding to the operation of storing the received facsimile data if the facsimile data is received; and
increasing the page number by one and proceeding to the operation of storing the received facsimile data if the facsimile data is not completely received,
wherein in the operation of converting the stored facsimile data, the converting of the stored facsimile data into the form of the electronic mail comprises converting the facsimile data into the form of the electronic mail according to the page number.

17. The method of claim 12, wherein the operation of storing the received facsimile data comprises:
converting a format of the received facsimile data if the facsimile data is received;
storing the converted format of facsimile data;
determining whether the received facsimile data is the end of the page to be printed or the facsimile data is completely received and proceeding to the operation of converting the format of the received facsimile data if the received facsimile data is not the end of the page and the facsimile data is not completely received;
determining whether the amount of the stored facsimile data with the converted format is less than the predetermined amount if the received facsimile data is the end of the page or the facsimile data is completely received, and proceeding to operation of converting the stored facsimile data if the amount of the stored facsimile data is more than the predetermined amount; and
determining whether the facsimile data is completely received if the amount of the stored facsimile data with the converted format is less than the predetermined amount, proceeding to the operation of converting the format of the received facsimile data if the facsimile data is not completely received, and proceeding to the operation of converting the stored facsimile data if the facsimile data is completely received.

18. The method of claim 17, wherein the operation of storing the received facsimile data further comprises:
setting a page number of the facsimile data and proceeding to operation of converting the format of the received facsimile data if the facsimile data is received; and
increasing the page number by one and proceeding to the operation of converting the format of the received facsimile data if the facsimile data is not completely received,
wherein in the operation of converting the storing facsimile data, the converting of the stored facsimile data into the form of the electronic mail comprises converting of the stored facsimile data into the form of the electronic mail according to the page number.

19. The method of claim 11, wherein the operation of converting the stored facsimile data into the form of the electronic mail comprises:
converting the stored facsimile data into the form of the electronic mail if the amount of the received facsimile data is more than the predetermined amount or the facsimile data is completely received; and
transmitting the facsimile data as the form of the electronic mail to the mail server, and proceeding to the operation of determining whether the facsimile data is completely received.

20. The method of claim 19, wherein in the operation of converting the stored facsimile data, the electronic mail comprises an identification factor to identify the facsimile data.

21. The method of claim 20, wherein the electronic mail comprises a standard or a non-standard header which includes the identification factor.

22. The method of claim 20, wherein the electronic mail comprises a title which includes the identification factor.

23. The method of claim 20, the method further comprising:
determining whether printing paper is newly supplied after there is no printing paper;
determining whether the electronic mail transmitted to the mail server when there is no printing paper exists, if the printing paper is newly supplied after there is no printing paper; and
receiving and displaying the electronic mail from the mail server, if the electronic mail transmitted to the mail server exists.

24. The method of claim 23, wherein the operation of receiving and displaying the electronic mail comprises:
accessing the mail server if the electronic mail transmitted to the mail server exists;
receiving a header from the accessed mail server;
extracting the identification factor from the header; and
perceiving the electronic mail belonging to the same facsimile document among the electronic mails divided and transmitted to the mail server and receiving the perceived electronic mail from the mail server, using the extracted identification factor, and showing the received electronic mail to the user.

25. The method of claim 11, further comprising:
determining whether a new printing paper is supplied after it is determined that there is no the printing paper;
determining whether the electronic mail transmitted to the mail server exists when it is determined that there is no printing paper, if the new printing paper is supplied after it is determined that there is no printing paper; and
receiving and displaying the electronic mail from the mail server if the electronic mail transmitted to the mail server exists.

26. The method of claim 25, wherein the operation of storing the received facsimile data comprises setting a state indicating that there is no printing paper when it is determined that there is no printing paper, performing the operation of determining that the new printing paper is supplied when there is printing paper and determines whether the state is set, and the method further comprises releasing the state if the state is set, and proceeding to the operation of determining that the electronic mail transmitted to the mail server exists.

27. The method of claim 25, wherein the operation of determining whether the electronic mail transmitted to the mail server exists further comprises searching for the mail server and determining whether the electronic mail transmitted to the mail server exists when there is no printing paper.

28. The method of claim 19, further comprising:
determining whether a new printing paper is supplied after it is determined that there is no printing paper;
determining whether the electronic mail transmitted to the mail server exists when it is determined that there is no printing paper, if the new printing paper is supplied after it is determined that there is no printing paper; and
receiving and displaying the electronic mail from the mail server is the electronic mail transmitted to the mail server exists.

29. The method of claim 28, wherein the operation of converting the stored facsimile data into the format the electronic mail further comprises setting a variable indicating that the facsimile data is transmitted as the form of the electronic mail to the mail server, and proceeding to the operation of determining that the facsimile data is completely received,
wherein in the operation of determining that the electronic mail transmitted to the mail server exists, it is determined whether the variable is set if the new printing paper is supplied after there is no printing paper,
wherein in the operation of receiving and displaying the electronic mail from the mail server, the electronic mail is received from the mail server if the variable is set, and the received electronic mail is provided to the user, and
wherein the method further comprises resetting the variable after the operation of receiving and displaying the electronic mail is performed.

30. A network facsimile performing both a function of transmitting/receiving an electronic mail to/from a mail server and a facsimile function, the network facsimile comprising:
a data receiving processor, which checks whether a printing paper to print facsimile data provided from an outside source exists, whether the facsimile data is received, whether an amount of the received facsimile data is more than a predetermined amount, and whether the facsimile data is completely received, to generate first, second, third and fourth control signals, respectively, receives and stores the facsimile data in response to first, second, third, and fourth control signals, and outputs the stored facsimile data in response to one of the third and fourth control signal; and
a data transmitting processor, which converts the stored facsimile data received from the data receiving processor into a form of the electronic mail and transmits the converted data to the mail server.

31. The network facsimile of claim 30, wherein the data receiving processor comprises:
a paper check unit, which checks whether there is the printing paper, in response to the second control signal and outputs the checked result as the first control signal;
a data receipt check unit, which checks whether the facsimile data is received, in response to the first control signal, and outputs the checked result as the second control signal;
a data management unit, which stores and manages the received facsimile data, in response to the second control signal.

32. The network facsimile of claim 31, wherein the data management unit comprises:
a first page check unit, which checks whether the received facsimile data is an end of a page to be printed and outputs the checked result as fifth control signal;
a first data storage unit, which stores the received facsimile data, in response to one of the second control signal, the fourth control signal, and the fourth and fifth control signals, and reads the stored facsimile data in response to one of the third and fourth control signal;
a first amount comparison unit, which compares an amount of the stored facsimile data received from the first data storage unit with the predetermined amount in response to the fourth and the fifth control signals, and outputs the comparison result as the third control signal; and
a first receiving completion check unit, which checks whether the facsimile data is completely received, in response to one of the third and fifth control signal, and outputs the checked result as the fourth control signal.

33. The network facsimile of claim 32, wherein the data management unit further comprises:
a first format converter, which converts a format of the stored facsimile data in response to one of the fourth and fifth control signals, outputs the converted format of the facsimile data to the first amount comparison unit, and outputs the converted format of the facsimile data to the data transmitting processor in response to the third and fourth control signals,
wherein the first amount comparison unit compares the amount of the converted format of the facsimile data with the predetermined amount.

34. The network facsimile of claim 32, wherein the data management unit further comprises:
a page number generator, which sets a page number of the received facsimile data in response to the second control signal, and increases the page number by one in response to the third and fourth control signals,
wherein the data transmitting processor constructs the form of the electronic mail according to the page number.

35. The network facsimile of claim 31, wherein the data management unit comprises:
a second format converter, which converts a format of the received facsimile data, in response to one of the second control signal, the third and fourth control signals, and the fourth and fifth control signals;
a second data storage unit, which stores the converted format of the facsimile data received from the second format converter, and reads the stored facsimile data in response to one of the third and fourth control signals;
a second page check unit, which checks whether the facsimile data is the end of the page to be printed, and outputs the checked result as the fifth control signal;
a second receiving completion check unit, which checks whether the facsimile data is completely received, in response to one of the third and fifth control signal, and outputs the checked result as the fourth control signal; and
a second amount comparison unit, which compares the amount of the stored facsimile data received from the second data storage unit with the predetermined amount in response to both the fourth and fifth control signals or only the fifth control signal, and outputs the compared result as the third control signal.

36. The network facsimile of claim 30, wherein the data transmitting processor comprises:
an electronic mail generator, which converts the stored facsimile data received from the data receiving processor into the form of the electronic mail; and
a data transmitter, which transmits the facsimile data in the form of the electronic mail received from the electronic mail generator to the mail server.

37. The network facsimile of claim 36, further comprising:
a paper check unit, which supplies printing paper after it is determined that there is no printing paper, and outputs the checked result as a sixth control signal;
a transmission mail check unit, which checks whether the electronic mail transmitted to the mail server when it is determined that there is no printing paper, exists, in response to the sixth control signal, and outputs the checked result as a seventh control signal; and
a mail receiving and displaying unit, which receives and displaying the electronic mail from the mail server in response to the seventh control signal.

38. The network facsimile of claim 37, wherein the data transmitting processor further comprises,
a variable setting unit, which sets a variable indicating that the facsimile data in the form of the electronic mail is transmitted to the mail server, in response to transmission completion of the facsimile data from the data transmitter, resets the variable in response to display completion from the mail receiving and displaying unit, and outputs the variable to the transmission mail check unit,
wherein the transmission mail check unit checks whether the variable is set, and outputs the checked result as the seventh control signal.

39. The network facsimile of claim 36, wherein the electronic mail generator converts the facsimile data into the form of the electronic mail so that the electronic mail includes an identification factor to identify the facsimile data.

40. The network facsimile of claim 39, further comprising:
a paper check unit, which checks whether a new printing paper is supplied after it is determined that there is no printing paper, and outputs the checked result as a sixth control signal;
a transmission mail check unit, which checks whether the electronic mail transmitted to the mail server when it is determined that there is no printing paper, exists, in response to the sixth control signal, and outputs the checked result as a seventh control signal; and
a mail receiving and displaying unit, which receives and displays the electronic mail from the mail server in response to the seventh control signal.

41. The network facsimile of claim 40, wherein the mail receiving and displaying unit comprises:
a header receiver, which accesses the mail server and receives a header from the mail server in response to the seventh control signal;
a factor extraction unit, which extracts the identification factor from the header;
a mail receiver, which identifies the electronic mail belonging to the same facsimile document that has been divided and transmitted to the mail server, using the extracted identification factor, and receives the identified electronic mail from the mail server; and
a display unit, which displays the electronic mail received from the mail receiver.

42. The network facsimile of claim 30, further comprising:
a paper check unit, which checks whether a new printing paper is supplied after it is determined that there is no printing paper and outputs the checked result as a sixth control signal;
a transmission mail check unit, which checks whether the electronic mail transmitted to the mail server when it is determined that there is no printing paper, exists, in response to the sixth control signal, and outputs the checked result as a seventh control signal; and
a mail receiving and displaying unit, which receives and displays the electronic mail from the mail server, in response to the seventh control signal.

43. The network facsimile of claim 42, wherein:
the data receiving processor generates a state signal indicating that there is no printing paper when it is determined that there is no printing paper;
the a paper check unit checks whether the state signal is generated, in response to the first control signal, and outputs the check result as the sixth control signal;
the network facsimile further comprises a state release unit which generates an eighth control signal to stop the generation of the state signal in response to the sixth control signal;
the data receiving processor stops generating the state signal in response to the eighth control signal; and
the transmission mail check unit checks whether the electronic mail transmitted to the mail server when it is determined that there is no printing paper, exists, in response to the eighth control signal.

44. The network facsimile of claim 42, wherein the transmission mail check unit searches for the mail server and generates the seventh control signal in response to the sixth control signal.
